# EUROPEAN PATENT APPLICATION

(11) **EP 2 997 928 A1**
(43) Date of publication of application: **23.03.2016**
(21) Application number: 14797472.9
(22) Date of filing: 24.02.2014
(51) Int. Cl.: A61C 9/00

(54) **UPPER AND LOWER TRAY APPARATUS FOR MANUFACTURING DENTURES**

(30) Priority: 16.05.2013 KR 20130055420
(71) Applicant: EQ CO., LTD., Gyeonggi-do 17064 (KR)
(72) Inventor: KIM, Jong Hwa, Gyeonggi-do 426-755 (KR); CHA, Sun Joo, Goyang-si Gyeonggi-do 410-315 (KR); KIM, Ki Jeong, Gyeonggi-do 16919 (KR)
(74) Representative: Regimbeau
(86) International application number: PCT/KR2014/001460
(87) International publication number: WO 2014/185622

(57) **Abstract**

An upper and lower tray apparatus for manufacturing dentures according to the present invention comprises: upper and lower trays (10a), (10b) inserted in the oral cavity of a patient so as to surround the upper and lower gums; upper and lower auxiliary trays (20a), (20b) inserted into a portion of the upper main tray (10a) and the lower main tray (10b) where occlusion takes place by the teeth coming into mutual contact, so as to be coupled or separated therefrom; and a tray control means (30), connected to the center portion between the upper main tray (10a) and the lower main tray (10b), for individually controlling the levelness and the height of the upper and lower main trays (10a) (10b) with respect to a cone die in the oral cavity of the patient to make the gums comfortable. Therefore, the upper and lower trays apparatus for manufacturing the dentures is distinctly different from existing techniques in terms of measuring a vertical distance between upper and lower jawbones and the movement path of the lower jawbones while taking a dental impression, and immediately aligning artificial teeth thereafter, during a patient's initial visit to a clinic, thereby enabling immediate confirmation of performance inside the oral cavity of the patient. Also, the upper and lower tray apparatus for manufacturing the dentures has the advantage of enabling the dentures, which are functionally and aesthetically completed in a revolutionary denture manufacturing period of five to six days, to accurately function in the oral cavity of the patient.

## Description

### [Technical Field]

The present invention relates to an upper and lower tray apparatus for manufacturing a denture, and more particularly, to an upper and lower tray apparatus for manufacturing a denture that can significantly reduce the period of manufacturing a denture by making a pattern (dental impression), measuring the vertical distance between upper and lower jaws and a movement path of the lower jaw, and arranging artificial teeth such that it works in the mouth of a patient the first time the patient visits a clinic.

### [Background Art]

In general, a denture, also called artificial teeth, is a prosthetic that restores the shapes and functions of lost teeth when natural teeth are pulled out.

The reason that a denture is needed is because when teeth are left with a natural tooth pulled out, occluding teeth may excessively grow or adjacent teeth may incline, and when a natural tooth is pulled out, the bone surrounding it, i.e. the jawbone, is absorbed and the gums sink.

Accordingly, when teeth are left for a long time after a tooth is pulled out, the jawbone is quickly absorbed by the body, so it becomes difficult to make and insert a denture.

In order to manufacture a denture, dental cavities and a periodontal diseases are treated first and then a denture is manufactured using gold, platinum, a nickel-chrome alloy, a synthetic resin, or dental porcelain.

Types of dentures currently used are as follows:
① Fixed denture (also called a fixed partial denture): This is a type of denture used in connecting an artificial tooth such as a bridge between healthy natural teeth that are used as support teeth, when there are fewer lost teeth and there are healthy teeth at both sides of the portion without a tooth.
② Removable partial denture: This is a denture used when many teeth are pulled out or the molars are pulled out. It holds the remaining natural teeth with a hook or supports a natural tooth with a precise contact device to prevent the tooth from being separated from the mount.
③ Full denture" This is a denture used in a case where all teeth pulled out and is the most difficult denture to manufacture.
   The denture can be supported in close contact with the oral mucosa of the mouth.
   A patient fitted with a denture has to be able to chew and pronounce speech well with the full denture in the mouth.
④ Implant: An implant is a contemporary prosthesis and is considered as a new type of denture. It is installed by implanting an artificial tooth root into the jawbone through a simple operation and then thread-fastening an artificial tooth into the artificial tooth root when a bone tissue is filled in between the artificial tooth root and the jawbone.

Such dentures are widely used and a process of manufacturing a common full denture using a personal dental tray is described hereafter.

A step of making a pattern for a patient's tooth using an impression material in a dental clinic.

A step of manufacturing a personal dental tray in a dental laboratory using the pattern manufactured in the dental clinic.

A step of making a pattern for the tooth using the personal dental tray in the dental clinic.

A step of manufacturing a prototype from dental plastic in a dental laboratory.

A step of putting the prototype manufactured in the dental laboratory into the mouth of a patient and adjusting the height therein.

A step of manufacturing a denture by arranging teeth on the denture with the height adjusted in a dental laboratory.

A step of fitting the denture with teeth in the mount of a patient.

A step of curing that replaces a wax denture with acryl resin when the patient is satisfied with the denture.

However, there is a problem in that this process of manufacturing a denture is not ideal.

This is because when the denture is heated, the center portion of the denture contracts to the uppermost position of gums due to curing. Accordingly, the center portion of the denture becomes thin and the outer sides become thick, so a space is generated at the center portion.

When a space is generated by curing, a space is generated between the denture and the gum, so the denture is easily separated.

On the other hand, an Ivocap system has been developed to solve this problem.

According to the Ivocap system, teeth are arranged using a prototype and the prototype is put into a mold and fixed by plaster.

The fixed prototype is removed by putting the mold into water and heating it therein.

An injection path for injecting an impression material into the plaster frame with only the teeth and with the prototype removed is used, and resin is injected under predetermined pressure with the plaster frame compressed by a pressing machine, thereby manufacturing a denture.

That is, the Ivocap system compensates for the degree of resin contraction and achieves occlusion by injecting resin under pressure with frames occluding and fixed.

However, a method of manufacturing a denture using the Ivocap system also has a problem in that an error is generated while occlusion is taken from an impression. Thus, when then the denture is fitted in the mouth of a patient the denture cannot be in close contact with the gums and may be easily separated.

That is, according to the Ivocap system, since a denture is manufactured through a single impression, when a patient or a dentist is not careful obtaining the impression, it is difficult to manufacture an accurate and stable denture for the patient. As described above, in the related art, when manufacturing a denture, a dentist and a dental laboratory have to put in a large amount of cost and labor to manufacture a denture fitting a patient, and a patient who needs a denture also has to visit a clinic several times over the course of two to three weeks to make a pattern (impression) and to have examinations, so it is very troublesome and inconvenient. Further, a denture completed through those complicated and time-consuming dental processes may not work well in the mouth of a patient and is difficult to fix.

### [Disclosure]

### [Technical Problem]

Accordingly, the present invention has been made keeping in mind the above problems occurring in the prior art, and an object of the present invention is to measure the vertical distance between upper and lower jawbones while making a pattern and directly arranging artificial teeth in order to check whether a denture works well in the mouth of the patient the first time he/she visits.

Another object of the present invention is to provide a denture that is manufactured in a short period of time of five to six days, with appropriate functional and aesthetic characteristics, and that can work well in the mouth of a patient.

### [Technical Solution]

In order to accomplish the above obj ect, the present invention provides an upper and lower tray apparatus for manufacturing a denture that includes: upper and lower main trays fitted on upper and lower gums in the mouth of a patient; upper and lower auxiliary trays coupled to or separated from occluding portions of the upper main tray and the lower main tray; and a tray adjustment unit disposed between the upper main tray and the lower main tray and adjusting horizontality and height of the upper and lower main trays to fit the patient so that the gums are comfortable around a condyle in the mouth of the patient, in which the upper and lower main trays each have a fitting hole having a stepped side formed along an inner edge at a horizontal surface of a body so that the upper and lower auxiliary trays are fitted therein, the tray adjustment unit includes: a fixing plate fixed at a center of a bottom of the upper main tray in close contact with left and right sides: a nut having a threaded hole at a predetermined depth at a lower center and integrally protruding downward at a center of a bottom of the fixing plate; a bolt having a threaded surface to adjust height by being in inserted in the threaded hole from under the nut, and having a fitting protrusion at a center of a bottom; a left-right sliding block having a fitting groove at a center of a top to be coupled to the fitting protrusion of the bolt and having a rail groove on a bottom; and a rail plate having a rail formed on a top to be fitted in the rail groove ofthe block and guiding the block sliding left and right, and fixed at a center of a top of the lower main tray in close contact with left and right sides by resin.

As another embodiment, a plurality of impression re-discharge holes is formed with regular intervals to left and right sides through fronts of the bodies of the upper and lower main trays so that an impression material is discharged without bubbles when the impression material is put into the upper and lower main trays and a pattern for the gums of the patient is made.

As another embodiment, a pair of left and right pin holes is formed at both ends of the bodies to selectively insert temporary horizontality adjustment pins having different heights so that the upper and lower main trays can be horizontally maintained on the patient's gums having different heights.

As another embodiment, the upper and lower auxiliary trays each have: a stepped surface formed on the outer side of a body to be fitted on the stepped surface formed in the fitting hole of the upper and lower main trays; a teeth arrangement space vertically opened so that artificial teeth are arranged at a center; and a transparent bottom plate fitted in the teeth arrangement space to seal openings being in contact with the upper and lower main trays 10a and having a plurality of projections vertically protruding at left and right sides and a center.

As another embodiment, a center pin hole is formed at the center projection of the plurality of projections formed on the transparent bottom plate to selectively fit temporary horizontality adjustment pins so that the upper and lower main trays maintain horizontality at a predetermined level with respect to the gums having different heights.

As another embodiment, wherein a horizontal oblong hole is formed at a center of a front of the body of the upper auxiliary tray so that a left-right balancing pin can be fitted in a measured center after an assembly of the upper main tray and auxiliary tray is put first into the mouth of the patient and left-right symmetry is measured.

As another embodiment, the bottoms of the upper and lower auxiliary trays and the transparent bottom plates are coupled to or separated from each other by fitting a plurality of protrusions into a plurality of grooves formed along a side.

Canceled

As another embodiment, the fitting protrusion of the bolt and the fitting groove of the block are coupled in a snapping type.

### [Advantageous Effects]

According to the upper and lower tray apparatus for manufacturing a denture, it is possible to separate or couple upper and lower auxiliary trays from or to upper and lower main trays and it is also possible to measure the vertical distance between upper and lower jawbones and the movement path of the lower jawbone, directly arrange artificial teeth on the upper and lower auxiliary trays, and directly check whether the artificial teeth work well so that a patient can feel comfortable occlusion. Accordingly, it is possible to considerably reduce the period for manufacturing a denture to five to six days in order to provide a complete denture to a patient the second day the patient meets the denture, by making a pattern (impression), measuring the vertical distance between upper and lower jawbones and the movement path of the lower jawbone, directly arranging artificial teeth, and checking whether the artificial teeth work well, and then sending a prototype to a dental laboratory, when the patient first visits the dental clinic.

### [Description of Drawings]

Fig. 1 an exploded perspective view showing upper and lower main trays and auxiliary trays ofthe present invention.
Fig. 2 is a perspective view showing an assembly of the upper and lower main trays and auxiliary trays of the present invention.
Fig. 3 is a cross-sectional view showing the assembly of the upper and lower main trays and auxiliary trays of the present invention.
Figs. 4A and 4B are exploded and assembled cross-sectional view showing the auxiliary tray ofthe present invention.
Fig. 5 is a perspective view showing a tray adjustment unit of the present invention.

### [Mode for Invention]

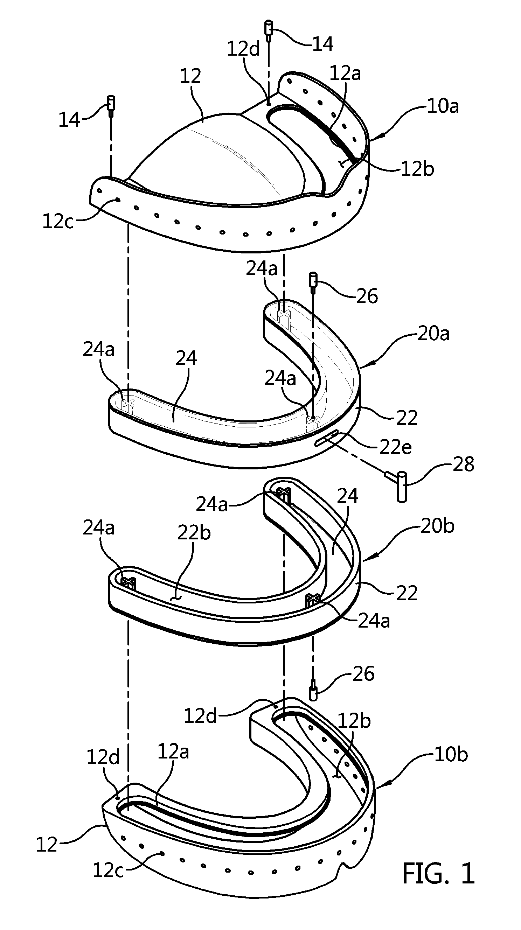

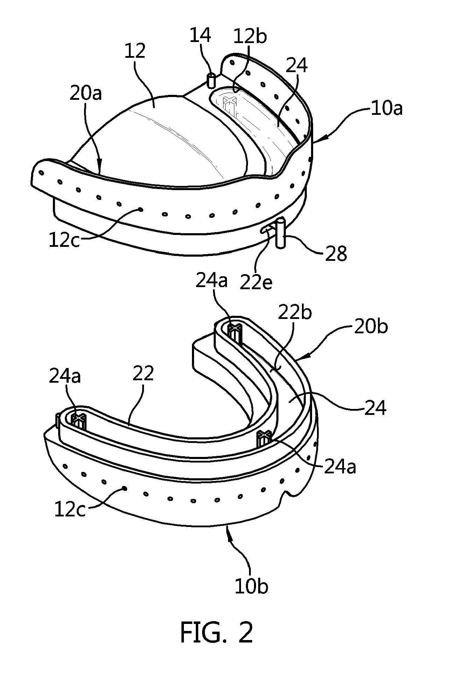

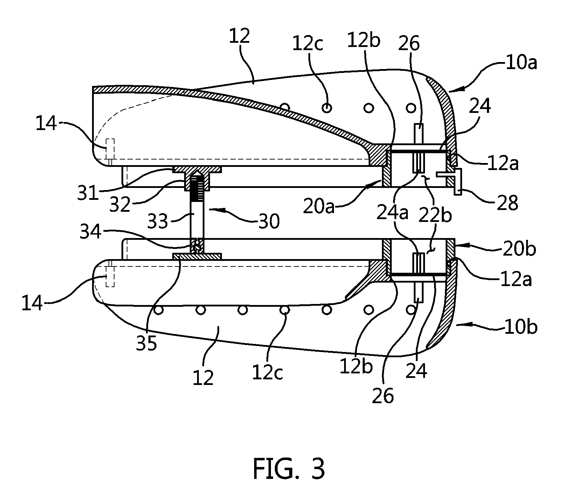

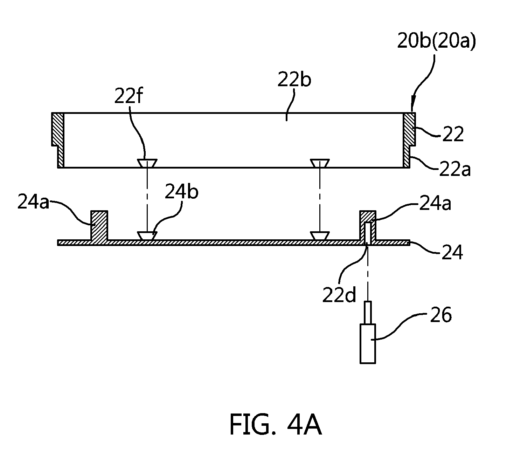

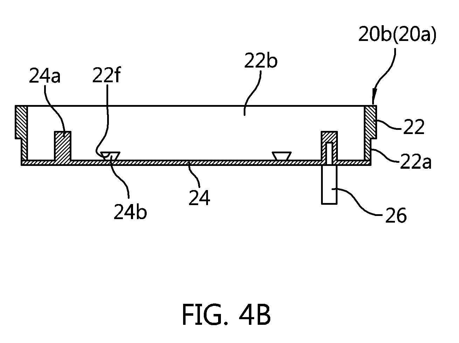

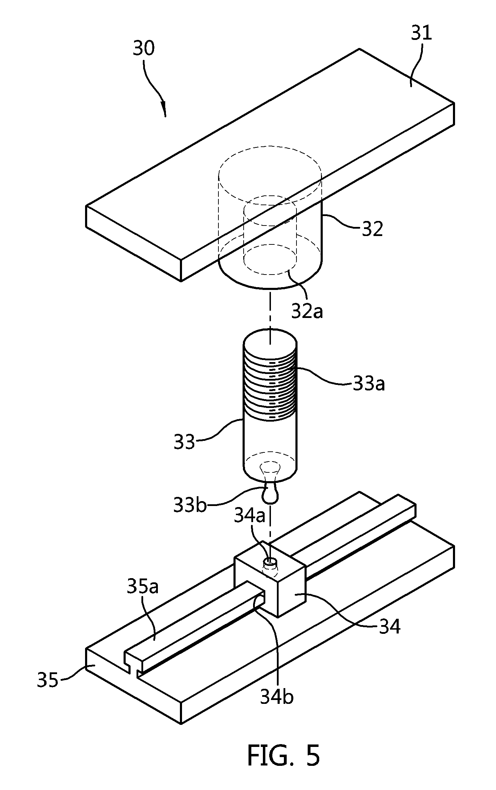

Embodiments of the present invention will be described hereafter in detail with reference to Figs. 1 to 5.

An upper and lower tray apparatus for manufacturing a denture of the present invention includes: upper and lower main trays 10a and 10b fitted on upper and lower gums in a mouth of a patient; upper and lower auxiliary trays 20a and 20b coupled to or separated from occluding portions of the upper main tray 10a and the lower main tray 10b; and a tray adjustment unit 30 disposed between the upper main tray 10a and the lower main tray 10b and adjusting horizontality and height ofthe upper and lower main trays 10a and 10b to fit a patient so that gums are comfortable around a condyle in the mouth ofthe patient.

The upper and lower main trays 10a and 10b each have: a U-shaped fitting hole 12b having a stepped side 12a formed along the inner edge at a horizontal surface of a body 12 so that the upper and lower auxiliary trays 20a and 20b are fitted at a predetermined depth therein; a plurality of impression re-discharge holes 12c formed with regular intervals to left and right sides through the front of the body 12 so that an impression material is discharged without bubbles when the impression material is put into the upper and lower main trays 10a and 10b and a pattern for the gums of a patient is made; and a pair of left and right pin holes 12d formed at both ends of the body 12 to selectively insert temporary horizontality adjustment pins 14 having different heights so that the upper and lower main trays 10a and 10b can be horizontally maintained on the patient's gums having different heights.

The upper and lower auxiliary trays 20a and 20b each have: a stepped surface formed on the outer side of a body 22 to be fitted on the stepped surface 12a formed in the fitting hole 12b on the body 12 of the upper and lower main trays 10a and 10b; a teeth arrangement space 22b vertically opened so that artificial teeth 40 are arranged at the center of the body 22; a transparent bottom plate 24 fitted in the teeth arrangement space 22b to seal openings being in contact with the upper and lower main trays 10a and 10b and having a plurality of projections 24a vertically protruding at the left and right sides and the center; a center pin hole 22d formed at the center projection of the plurality of projections 24a formed on the transparent bottomplate 24 to selectively fit temporary horizontality adjustment pins 26 so that the upper and lower main trays 10a and 10b maintain horizontality at a predetermined level with respect to gums having different heights; a horizontal oblong hole 22e formed at the center ofthe front ofthe body 22 of the upper auxiliary tray 20a so that a left-right balancing pin 28 can be fitted in a measured center after an assembly ofthe upper main tray 10a and auxiliary tray 20a is put first into a mouth of a patient and left-right symmetry is measured.

The bottoms of the upper and lower auxiliary trays 20a and 20b and the transparent bottom plates 24 are coupled to or separated from each other by fitting a plurality of protrusions 24b into a plurality of grooves 22f formed along the side.

The left-right balancing pin 28 is formed in an L-shape to be fitted at a predetermined position in the horizontal oblong hole 22e after a left-right symmetric point ofthe assembly of the upper main tray 10a and auxiliary tray 20a using a weight hung on a thread from the center of the forehead of a patient, and is fixed to the auxiliary tray 20a when resin is sprayed and hardened.

The tray adjustment unit 30 includes: a fixing plate 31 fixed at the center of the bottom of the upper main tray 10b in close contact with left and right sides: a nut 32 having a threaded hole 32a at a predetermined depth at a lower center and integrally protruding downward at the center of the bottom of the fixing plate 31; a bolt 33 having a threaded surface 33a to adjust height by being in inserted in the threaded hole 32a from under the nut 32, and having a fitting protrusion 33b at the center of the bottom; a left-right sliding block 34 having a fitting groove 34a at the center ofthe top to be snapped to the fitting protrusion 33b of the bolt 33 and having a rail groove 34b on the bottom; and a rail plate 35 having a rail 35a formed on the top to be fitted in the rail groove 34a of the block 34 and guiding the block 34 sliding left and right, and fixed at the center of the top of the lower main tray 10b in close contact with left and right sides by resin.

Next, operation and effect of the upper and lower tray apparatus for manufacturing a denture ofthe present invention are described hereafter.

In order to use the upper and lower tray apparatus for manufacturing a denture of the present invention, it is required to first bring the upper main tray 10a in close contact with the upper gum in the mouth of a patient who needs a denture and then bring the lower main tray 10b in close contact with the lower gum.

In this process, the upper main tray 10a and the lower main tray 10b are supported to maintain horizontality at a predetermined level without inclining to a side from the gums by the height of the horizontality adjustment pins 14 and 26 fitted in the pair of left and right pin holes 12d and the center pin hole 22d formed at the sides of the upper and lower main trays 10a and 10b.

That is, since the gums of patients are not uniform and are different in height, the upper and lower main trays 10a and 10b can be supported by the temporary horizontality adjustment pin 26 to maintain horizontality without inclining to an side from non-uniform gums when an impression material is injected into non-uniform spaces generated between the upper and lower main trays 10a and 10b and the gums.

Further, the tray adjustment unit disposed between the upper main tray 10a and the lower main tray 10b adjusts inclination such that the inner gap between the upper main tray 10a and the lower main tray 10b become, for example, 5∼7mm and the outer gap becomes 1 cm or more around a condyle in the mouth of a patient, and it adjusts the upper main tray 10a and the lower main tray 10b to be horizontal to the left and right sides.

That is, with the upper main tray 10a and the lower main tray 10b inserted in the mouth of a patient, the vertical distance between upper and lower jawbones and the movement path of the lower jawbone are measured and adjusted so that the artificial teeth 40 can be arranged and directly examined as to whether they work well, using the tray adjustment unit 30.

For example, when the bolt 33 of the tray adjustment unit 30 is turned in a predetermined direction, the bolt 33 is tightened in the nut 32, so the gap between the upper main tray 10a and the lower main tray 10b decreases, and in contrast, when the bolt 33 is turned in the opposite direction, the bolt 33 is loosened in the nut 32, so the gap between the upper main tray 10a and the lower main tray 10b increases.

Further, when the block 34 fitted on the lower end of the bolt 33 in a snapping type is moved left or right, the block 34 slides along the rail 35a of the rail plate 35 fitted in the rail groove 34b on the bottom, so the left-right horizontality of the upper main tray 10a and the lower main tray 10b can be adjusted.

When adjustment of the upper main tray 10a and the lower main tray 10b in the mouth of a patient is finished, as described above, the upper main tray 10a and the lower main tray 10b assembled with the upper and lower auxiliary trays 20a and 20b are taken out of the mouth of the patient, an impression material is filled, the assembly is put back into the mouth of the patient, and then the patient finely adjusts in person the horizontality of the upper main tray 10a and the lower main tray 10b filled with the impression material.

That is, the horizontality and height of the upper main tray 10a and the lower main tray 10b are adjusted to fit a patient so that his/her gums are comfortable around a condyle by finely adjusting the tray adjustment unit 30 with the mouth of the patient open after the upper main tray 10a and the lower main tray 10b are attached to the upper and lower gums, respectively, by the impression material.

Thereafter, by inserting a gel-state impression material in between the projections 24a on the transparent bottom plate 24 of the upper auxiliary tray 20a and the projections 24a on the transparent bottom plate 24 of the lower auxiliary tray 20b and then hardening the impression material, the upper auxiliary tray 20a and the lower auxiliary tray 20b are partially coupled to each other by the hardened impression material with a predetermined vertical gap.

The gap between the upper auxiliary tray 20a and the lower auxiliary tray 20b is for providing a dimension making providing a patient with comfortable occlusion when the artificial teeth 40 occlude later in the teeth arrangement spaces 22b of the upper and lower auxiliary trays 20a and 20b.

That is, for the gap between the upper auxiliary tray 20a and the lower auxiliary tray 20b, for example, by setting the distance from a horizontal center line dividing the gap into two parts to the lower end of the upper auxiliary tray 20a to 12.5mm at the maximum and setting the distance from the horizontal center line to the upper end of the lower auxiliary tray 20b to 10mm or less at the maximum, using a gauge, optimal occlusion of the artificial teeth 40 is provided.

When a patient opens his/her mouth with the upper and lower auxiliary trays 20a and 20b coupled, the assembly ofthe auxiliary trays 20a and 20b is naturally separated from the upper and lower main trays 10a and 10b and also can come out ofthe mouth of the patient.

The assembly of the auxiliary trays 20a and 20b separated from the upper and lower main trays 10a and 10b are separated by a specific articulator that can reproduce the inter-jaw relationship (jaw gap) in the mouth of a patient, and when the upper and lower artificial teeth 40 are arranged and fixed, the assembly of the auxiliary trays is combined back with the upper and lower main trays 10a and 10b, the assembly of the main trays 10a and 10b and the auxiliary trays 20a and 20b that the patient holds in the mouth is taken out ofthe mouth ofthe patient, and is sent to a dental laboratory and cured, thereby manufacturing a complete denture.

Accordingly, according to the upper and lower tray apparatus for manufacturing a denture, it is possible to considerably reduce the period for manufacturing a denture to five to six days in order to provide a complete denture to a patient the second day he/she visits a dental clinic , by making a pattern (impression), measuring the vertical distance between upper and lower jawbones and the movement path of the lower jawbone, directly arranging artificial teeth, and checking whether the artificial teeth work well, and then sending a prototype to a dental laboratory the first day the patient visits the dental clinic.

That is, in the conventional art, patients have to visit a dental clinic several times, make a pattern (impression), and have examinations over the course of two to three weeks, so it is very troublesome and inconvenient, but according to the present invention, a pattern (impression) is made and examined within two visits to a dental clinic over a period of five to six days, so it is possible to significantly reduce the trouble and inconvenience to a patient and to provide a more functional and aesthetic denture that can accurately work in the mouth of a patient.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

*** Description of Reference Numerals***

| | |
|---|---|
| 10a; upper main tray | 10b: lower main tray |
| 12: body | 12c: impression re-discharge hole |
| 12d: pair of left and right pin holes | 14: temporary horizontality adjustment pin |
| 20a: upper auxiliary tray | 20b: lower auxiliary tray |
| 22: body | 22a: stepped surface |
| 22b: teeth arrangement space | 22d: center pin hole |
| 22e: horizontal oblong hole | 22f: groove |
| 24: transparent bottom plate | 24a: projection |
| 24b: protrusion | 26: temporary horizontality adjustment pin |
| 28: left-right balancing pin | 30: tray adjustment unit |
| 31: fixing plate | 32: nut |
| 32a: threaded hole | 33: bolt |
| 22a: threaded surface | 33b: fitting protrusion |
| 34: block | 34a: fitting groove |
| 34b: rail groove | 35: rail plate |
| 35a: rail | 40: artificial teeth |

## Claims

1. Canceled

2. An upper and lower tray apparatus for manufacturing a denture, comprising: upper and lower main trays (10a) and (10b) fitted on upper and lower gums in a mouth of a patient; upper and lower auxiliary trays (20a) and (20b) coupled to or separated from occluding portions of the upper main tray (10a) and the lower main tray (10b); and a tray adjustment unit (30) disposed between the upper main tray (10a) and the lower main tray (10b) and adjusting horizontality and height of the upper and lower main trays (10a) and (10b) to fit the patient so that the gums are comfortable around a condyle in the mouth ofthe patient,
wherein the upper and lower main trays (10a) and (10b) each have a fitting hole (12b) having a stepped side (12a) formed along an inner edge at a horizontal surface of a body (12) so that the upper and lower auxiliary trays (20a) and (20b) are fitted therein, the tray adjustment unit (30) includes: a fixing plate (31) fixed at a center of a bottom of the upper main tray (10b) in close contact with left and right sides: a nut (32) having a threaded hole (32a) at a predetermined depth at a lower center and integrally protruding downward at a center of a bottom of the fixing plate (31); a bolt (33) having a threaded surface (33a) to adjust height by being in inserted in the threaded hole (32a) from under the nut (32), and having a fitting protrusion (33b) at a center of a bottom; a left-right sliding block (34) having a fitting groove (34a) at a center of a top to be coupled to the fitting protrusion (33b) of the bolt (33) and having a rail groove (34b) on a bottom; and a rail plate (35) having a rail (35a) formed on a top to be fitted in the rail groove (34a) ofthe block (34) and guiding the block (34) sliding left and right, and fixed at a center of a top of the lower main tray (10b) in close contact with left and right sides by resin.

3. The apparatus of claim 2, wherein a plurality of impression re-discharge holes (12c) is formed with regular intervals to left and right sides through fronts of the bodies (12) of the upper and lower main trays (10a) and (10b) so that an impression material is discharged without bubbles when the impression material is put into the upper and lower main trays (10a) and (10b) and a pattern for the gums of the patient is made.

4. The apparatus of claim 2, wherein a pair of left and right pin holes (12d) is formed at both ends of the bodies (12) to selectively insert temporary horizontality adjustment pins (14) having different heights so that the upper and lower main trays (10a) and (10b) can be horizontally maintained on the patient's gums having different heights.

5. The apparatus of claim 2, wherein the upper and lower auxiliary trays (20a) and (20b) each have: a stepped surface formed on the outer side of a body (22) to be fitted on the stepped surface (12a) formed in the fitting hole (12b) of the upper and lower main trays (10a) and (10b); a teeth arrangement space (22b) vertically opened so that artificial teeth (40) are arranged a center; and a transparent bottom plate (24) fitted in the teeth arrangement space (22b) to seal openings being in contact with the upper and lower main trays (10a) and (10b) and having a plurality of projections (24a) vertically protruding at left and right sides and a center.

6. The apparatus of claim 5, wherein a center pin hole (22d) is formed at the center projection of the plurality of projections (24a) formed on the transparent bottom plate (24) to selectively fit temporary horizontality adjustment pins (26) so that the upper and lower main trays (10a) and (10b) maintain horizontality at a predetermined level with respect to the gums having different heights.

7. The apparatus of claim 5, wherein a horizontal oblong hole (22e) is formed at a center of a front of the body (22) ofthe upper auxiliary tray (20a) so that a left-right balancing pin (28) can be fitted in a measured center after an assembly of the upper main tray (10a) and auxiliary tray (20a) is put first into the mouth of the patient and left-right symmetry is measured.

8. The apparatus of claim 5, wherein the bottoms of the upper and lower auxiliary trays (20a) and (20b) and the transparent bottom plates (24) are coupled to or separated from each other by fitting a plurality of protrusions (24b) into a plurality of grooves (22f) formed along a side.

9. Canceled

10. The apparatus of claim 2, wherein the fitting protrusion (33b) of the bolt (33) and the fitting groove (34a) ofthe block (34) are coupled in a snapping type.
